# EUROPEAN PATENT APPLICATION

(11) **EP 1 942 165 A1**
(43) Date of publication of application: **09.07.2008**
(21) Application number: 06811306.7
(22) Date of filing: 05.10.2006
(51) Int. Cl.: C09D 201/02, B05D 7/14, B05D 7/24, B32B 27/00, C09D 105/16

(54) **MATERIAL FOR ROOM TEMPERATURE CURABLE AQUEOUS OVERCOATING MATERIAL AND COATING MATERIAL USING SAME**

(30) Priority: 06.10.2005 JP 2005293539; 06.10.2005 JP 2005293540
(71) Applicant: Nissan Motor Company Limited, Kanagawa-ku Yokohama-shi, Kanagawa 221-0023 (JP); The University of Tokyo, Bunkyo-Ku, Tokyo 113-8654 (JP)
(72) Inventor: ITO, Kohzo, Tokyo 116-0002 (JP); ARAKI, Jun, Tokyo 104-0052 (JP); SUZUKI, Tatsuya, 1-1, Morinosatoaoyama, Atsugi-shi Kanagawa 243-0123 (JP); YAMANAKA, Masahiko, 1-1, Morinosatoaoyama, Atsugi-shi Kanagawa 243-0123 (JP); WATANABE, Kentarou, 1-1, Morinosatoaoyama, Atsugi-shi Kanagawa 243-0123 (JP)
(74) Representative: Hager, Thomas Johannes
(86) International application number: PCT/JP2006/319968
(87) International publication number: WO 2007/040263

(57) **Abstract**

There is provided a room-temperature drying aqueous overcoating medium containing 1 to 100 mass% of hydrophilic polyrotaxane with respect to the coating film forming component, where the hydrophilic polyrotaxane has a cyclic molecule, a linear molecule included in the cyclic molecule in a skewered manner and blocking groups arranged on opposite ends of the linear molecule to prevent elimination of the cyclic molecule from the linear molecule and at least one of the linear molecule and the cyclic molecule has a hydrophilic modifying group.

## Description

### TECHNICAL FIELD

The present invention relates to an overcoating medium suitable for interior or exterior resin molded parts, wooden products such as staircase, floor and furniture, products treated with plating, deposition, sputtering etc. and the like and, more particularly, to a hydrophilic polyrotaxane used as a highly abrasion-resistant, room-temperature drying aqueous overcoating material.

### BACKGROUND ART

Molded parts of polycarbonate resins, acrylic resins and the like can be surface treated with curable coatings e.g. room-temperature curable coatings and two-liquid urethane coatings for property improvements when the resin molded parts do not satisfy a required level of properties including hardness, weather resistance, stain resistance, solvent resistance and corrosion resistance. Further, various parts may be treated with metal mirror finishings such as plating, deposition and sputtering for product design improvements. These metal mirror finishings are likely to be damaged remarkably and thus generally surface treated with curable coatings such as room-temperature curable coatings and two-liquid urethane coatings. However, the surface treatment films of the room-temperature curable coatings and two-liquid urethane coatings are also likely to be damaged remarkably.

On the other hand, there has recently been an increasing tendency to provide automotive coatings with improved durability so as to maintain new-car coating appearances over an extended time period. It is thus desired that the coatings show sufficient abrasion resistance to be protected from damages by car wash, dust, stone and the like. As such abrasive-resistant coatings, there are conventionally known ultraviolet (UV) curable coatings, electron-beam (EB) curable coatings, silica hard coatings, two-liquid acrylic urethane soft coatings. The UV curable coatings, EB curable coatings and silica hard coatings are however likely to cause decreases in adhesion to substrates and susceptible to cracking. The two-liquid acrylic urethane soft coatings are likely to leave tacky feelings and low in weather and stain resistance.

Room-temperature curable lacquers are widely used as repair coatings. (Refer to Patent Publication 1 and Patent Publication 2.) However, these room-temperature curable lacquers have poor abrasion and chipping resistance due to hardness and brittleness.

Patent Document 1: Japanese Patent Publication No. S52-3631
Patent Document 2: Japanese Patent Publication No. H9-176557

There has been also a recent demand to develop aqueous water-soluble coating materials that do not require the use of organic solvents.

### SUMMARY OF THE INVENTION

The present invention has been made to solve the above problems encountered in the conventional coatings, notably room-temperature curable lacquers.
It is an object of the present invention to provide a room-temperature drying aqueous overcoating medium having excellent abrasion resitance, chipping resistance and any other required coating properties e.g. adhesion etc. comparable to the conventional room-temperature curable lacquers and a suitable material for such a room-temperature drying aqueous overcoating medium.

As a result of extensive researches, the present inventors have focused attention to a polyrotaxane having elasticity, viscoelasticity and mechanical strength under its pulley effect and found that the above object can be achieved by modifying the polyrotaxane to the water-soluble, room-temperature drying type e.g. with hydrophilic modification of all or part of hydroxyl groups of cyclic molecule(s) of the polyrotaxane and using such a hydrophilic polyrotaxane as a coating material. The present invention is based on these findings.

According to the present invention, there is provided a room-temperature drying aqueous overcoating material formed of a hydrophilic polyrotaxane alone or in combination with another resin or resins, the hydrophilic polyrotaxane having a cyclic molecule, a linear molecule included in the cyclic molecule in a skewered manner and blocking groups arranged on opposite ends of the linear molecule to prevent elimination of the cyclic molecule from the linear molecule, at least one of the linear molecule and the cyclic molecule having hydrophilicity.

There is also provided a room-temperature drying aqueous overcoating medium containing 1 to 100% of the overcoating material with respect to the coating film forming component and a coating film formed by curing the room-temperature drying aqueous overcoating medium.

In the present invention, the polyrotaxane is modified with the hydrophilic modifying group so as to show water solubility. By the use of such a water-soluble modified polyrotaxane as the material of the room-temperature drying aqueous overcoating medium, the coating film of the room-temperature drying aqueous overcoating medium is able to attain improved abrasion and chipping resistance because of the elasticity, viscoelasticity and mechanical strength of the polyrotaxane on the basis of the polyrotaxane pulley effect.

### BRIEF DESCRIPTION OF THE DRAWINGS

FIG. 1 is a schematic view showing an example of basic structure of a hydrophilic polyrotaxane according to the present invention.
FIG. 2 is a schematic section view showing a structure of a laminated coating film according to one embodiment of the present invention.
FIG. 3 is a schematic section view showing a structure of a laminated coating film according to another embodiment of the present invention.
FIG. 4 is a schematic section view showing a structure of a laminated coating film according to still another embodiment of the present invention.

### DETAILED DESCRIPTION

Hereinafter, the present invention will be described below in detail with reference to the drawings. In the following description, all percentages (%) are by mass unless otherwise specified.

A room-temperature drying aqueous overcoating material of the present invention is formed of a hydrophilic polyrotaxane 1 alone or in combination with an additional resin. Specific examples of the additional resin include, but not limited to, acrylic resins, epoxy resins and polyester resins. A room-temperature drying aqueous overcoating medium of the present invention is prepared by blending and mixing the room-temperature drying aqueous coating material with at least one selected from the group consisting of a resin material, an addition agent, a pigment, a brightening agent and a solvent according to a common procedure. A coating film of the present invention is formed by curing the room-temperature drying aqueous overcoating medium.

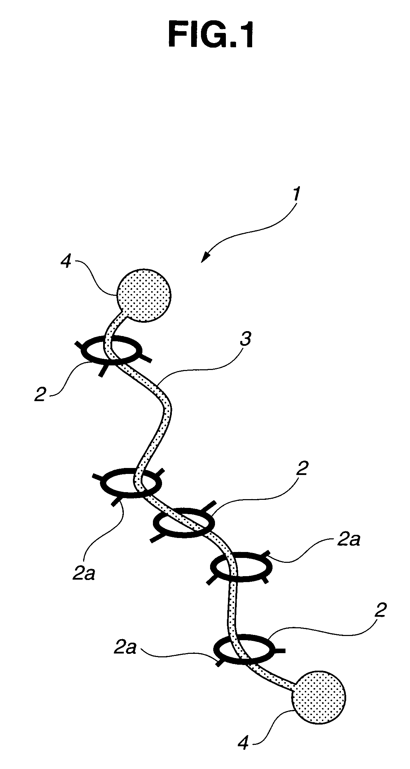

FIG. 1 is a schematic view showing an example of basic structure of the hydrophilic polyrotaxane 1. The hydrophilic polyrotaxane 1 has a cyclic molecule or molecules 2, a linear molecule 3 passing through an opening(s) of the cyclic molecule(s) 2 in a skewered manner and blocking groups 4 bonded to opposite ends of the linear molecule 3 so as to prevent elimination of the cyclic molecule(s) 2 from the linear molecule 3. Under external stress, the polyrotaxane 1 has the property (called the pulley effect) of allowing the cyclic molecule 2 to move freely along the linear molecule 3 for excellent elasticity and viscoelasticity.

In the present invention, either or both of the cyclic molecule 2 and the linear molecule 3 are hydrophilic. Typically, all or part of hydroxyl groups of the cyclic molecule 2 are modified with a hydrophilic modifying group(s) 2a as shown in FIG. 1 such that the polyrotaxane 1 shows hydrophilicity in its entirety so as to be soluble in water or aqueous solvent and mixable as an aqueous coating material. When this hydrophilic polyrotaxane 1 is mixed with the other resin, the polyrotaxane 1 and the other resin form pseudo cross-links therebetween by Van der Waals force etc. and behave together as a composition or a compound while exerting the pulley effect of the hydrophilic polyrotaxane 1.

Specific examples of the hydrophilic modifying group 2a include, but not limited to, carboxyl groups, sulfonic acid groups, sulfuric ester groups, phosphoric ester groups, primary to tertiary amino groups, quaternary ammonium salt groups and hydroxyalkyl groups.

As long as the polyrotaxane 1 shows hydrophilicity in its entirety, a part of the hydroxyl groups of the cyclic molecule 2 may be modified with a hydrophobic modifying group(s). Specific examples of the hydrophobic modifying group are alkyl groups, benzyl group (benzene ring) and benzene derivative containing groups, acyl groups, silyl groups, trityl groups, nitric ester groups and tosyl groups.

More specifically, it is preferable that the polyrotaxane 1 has a solubility parameter of 8.5 to 23.4 and is capable of being dissolved or dispersed uniformly in water or aqueous solvent.

There is no particular restriction on the cyclic molecule 2 as long as the pulley effect can be produced by inclusion of the linear molecule 3 in the cyclic molecule 2 as mentioned above. Various cyclic molecules are usable. The cyclic molecules are often provided with hydroxyl groups. The cyclic molecule 2 does not necessarily have a completely closed cyclic structure and may have a substantially cyclic structure such as C-shaped structure.

Preferably, the cyclic molecule 2 has a reactive group for ease of bonding with the hydrophilic modifying group 2a. Specific examples of the reactive group include, but not limited to, a hydroxyl group, carboxyl groups, amino groups, epoxy groups, isocyanate groups, thiol groups and aldehyde groups. Preferred as the reactive group are those that do not react with the blocking groups 4 during the formation of the blocking groups 4 (blocking reaction).

The degree of modification of the cyclic molecule 2 with the hydrophilic modifying group 2a is preferably 0.1 or greater, more preferably 0.3 or greater, still more preferably 0.5 or greater, with the proviso that the maximum possible degree of modification of the hydroxyl groups of the cyclic molecule 2 is 1. If the degree of modification of the cyclic molecule 2 with the hydrophilic modifying group 2a is less than 0.1, the polyrotaxane does not show sufficient solvability in water or aqueous solvent so that there may arise an insoluble spot (such as a protrusion due to the adhesion of a foreign substance). Herein, the maximum possible degree of modification of the hydroxyl groups of the cyclic molecule 2 refers to the total number of the hydroxyl groups of the cyclic molecule 2 before modified. The modification degree of the cyclic molecule 2 with the hydrophilic modifying group 2a is thus defined as the ratio of the number of the hydroxyl group or groups modified with the hydrophilic modifying group 2a to the total hydroxyl group number.

When the polyrotaxane 1 has a plurality of cyclic molecules 2, all or part of the hydroxyl groups of each cyclic molecule 2 are not necessarily modified with the hydrophilic group 2a. As long as the polyrotaxane 1 shows hydrophilicity in its entirety, a part of the cyclic molecules 2 may have no hydroxyl groups modified with the hydrophilic group 2a.

In the case of using cyclodextrin as the cyclic molecule 2 of the polyrotaxane 1, the hydrophilic modifying group 2a can be introduced into the cyclic molecule 2 by hydroxy-propylation of the cyclodextrin with propylene oxide. In this case, the hydroxyalkyl modification degree of the cyclodextrin can be controlled by adjusting the addition amount of the propylene oxide.

The number of the cyclic molecule or molecules 2 for inclusion of the linear molecule 3 (referred to as the inclusion amount of the cyclic molecule 2) is preferably 0.06 to 0.61, more preferably 0.11 to 0.48, still more preferably 0.24 to 0.41, with the proviso that the maximum possible inclusion amount of the cyclic molecule 2 to include therein the linear molecule 3 is 1. If the inclusion amount of the cyclic molecule 2 is less than 0.06, the coating film may decrease in elongation due to insufficient pulley effect of the cyclic molecule 2. If the inclusion amount of the cyclic molecule 2 exceeds 0.61, the cyclic molecule 2 are low in mobility due to their too close configuration so that the coating film may decrease in elongation to cause chipping and abrasion resistance deterioration.

For example, in the case of producing the polyrotaxane 1 by preparing a solution in which BOP (benzotriazole-1-yl-oxy-tris(dimethylamino) phosphonium hexafluorophosphate) reagent, HOBt (1-hydroxybenzotriazole), adamantine amine and diisopropylethyl amine have been dissolved in DMF (dimethylformamide) in this order, preparing a dispersion liquid in which an inclusion complex of the cyclic molecule 2 and the linear molecule 3 has been dispersed in a mixed solvent of dimethylformamide and dimethyl sulfoxide (DMSO) and adding the dispersion liquid to the solution, the inclusion amount of the cyclic molecule 2 can be controlled by adjusting the mixture ratio of the mixed solution. In this case, the inclusion amount of the cyclic molecule 2 increases with the proportion of DMF to DMF/DMSO.

Specific examples of the cyclic molecule 2 include various cyclodextrins such as α-cyclodextrin (glucose number: 6), β-cyclodextrin (glucose number: 7), γ-cyclodextrin (glucose number: 8), dimethylcyclodextrin and glucosylcyclodextrin and derivatives or modified variants thereof, crown ethers, benzo-crowns, dibenzo-crowns, dicyclohexano-crowns, and derivatives and modified variants thereof. These cyclic molecules e.g. cyclodextrins can be used alone or in combination of two or more thereof.
Among others, α-cyclodextrin, β-cyclodextrin and γ-cyclodextrin are preferred. Particularly preferred is α-cyclodextrin in terms of ease of inclusion.

The linear molecule 3 has a linear or substantially linear structure. The linear molecule 3 may have a branched chain or chains as long as the linear molecule 3 is included in the cyclic molecule 2 in such a manner that the cyclic molecule 2 functions as a rotator to make a rotational movement for the pulley effect. Although the length of the linear molecule 3 depends on the size of the cyclic molecule 2, there is no particular restriction on the length of the linear molecule 3 as long as the cyclic molecule 2 contributes to the pulley effect.

Preferably, the linear molecule 3 has reactive groups at the opposite ends thereof for ease of bonding with the blocking groups 4. These reactive groups are selected appropriately depending on the kind of the blocking groups 4 etc. Specific examples of the reactive groups include a hydroxyl group, amino groups, carboxyl groups and thiol groups.

Specific examples of the linear molecule 3 include, but not limited to, polyalkylenes, polyesters such as polycaprolactone, polyethers such as polyethylene glycol, polyamides, polyacryls and linear compounds containing benzene ring structures. Among others, polyethylene glycol and polycaprolactone are preferred. Particularly preferred is polyethylene glycol in terms of solubility in water or aqueous solvent.

The molecular weight of the linear molecule 3 is preferably 1000 to 50000, more preferably 10000 to 40000, still more preferably 20000 to 35000. If the molecular weight of the linear molecule 3 is less than 1000, the coating film decreases in elongation to cause abrasion and chipping resistance deterioration due to insufficient pulley effect of the cyclic molecule 2. If the molecular weight of the linear molecule 3 exceeds 50000, the polyrotaxane decreases in solubility. In addition, the surface coating film deteriorates in overcoat appearance e.g. smoothness and luster.

The blocking groups 4 can be of any kind as long as the blocking groups 4 are bonded to the opposite ends of the linear molecule 3 to keep the cyclic molecule 2 skewered with the linear molecule 3. As the blocking groups 4, there can be used bulky and ionic groups. Herein, the "groups" refers to various groups such as molecular groups and polymer groups.

Specific examples of the bulk groups are those in spherical form or lateral-wall form. Specific examples of the ionic groups are those capable of interacting with (e.g. repeling) the ionicity of the cyclic molecule 2 to keep the cyclic molecule 2 skewered with the linear molecule 3.

Specific examples of the blocking groups 4 are dinitrophenyls such as 2,4-dinitrophenyl and 3,5-dinitrophenyl, cyclodextrins, adamantanes, trityls, fluoresceins, pyrenes, and derivatives and modified variants thereof.

The hydrophilic polyrotaxane 1 can be produced by e.g. (1) mixing the cyclic molecule 2 and the linear molecule 3 to pass the linear molecule 3 through the opening of the cyclic molecule 2 in a skewered manner, (2) blocking the opposite ends of the resulting pseudo-polyrotaxane (i.e. the opposite ends of the linear molecule 3) with the blocking groups 4 to prevent elimination of the cyclic molecule 2 from the linear molecule 3, and then, (3) modifying the hydroxyl group or groups of the cyclic molecule 2 of the polyrotaxane 1 with the hydrophilic modifying group 2a.

In the above step (1), the cyclic molecule 2 may be those of which the hydroxyl group or groups have already been modified with the hydrophilic modifying group 2a. The above step (3) could be omitted in this case.

By the above production process, the hydrophilic polyrotaxane 1 can be produced with excellent solubility in water or aqueous solvent and suitably used as the room-temperature drying aqueous overcoating material.

The hydrophilic polyrotaxane 1 may be crosslinked or pseudo-crosslinked with the other polymer having a relatively low molecular weight, typically of the order of a few thousands, to form a hydrophilic crosslinked polyrotaxane as long as the polyrotaxane shows solubility in water or aqueous solvent. This crosslinked polyrotaxane can be used in the room-temperature drying aqueous overcoating medium in place of or in combination with the non-crosslinked polyrotaxane 1.

In the present invention, the room-temperature drying aqueous overcoating medium can be applied to form the coating film without recourse to the crosslinking reaction of the polyrotaxane 1.

The content of the hydrophilic polyrotaxane 1 in the room-temperature drying aqueous overcoating medium is generally 1 to 100%, preferably 30 to 100%, more preferably 60 to 100%, in units of mass ratio with respect to the coating film forming component (solid content). If the content percentage of the hydrophilic polyrotaxane 1 relative to the coating film forming component is less than 1%, the coating film may decrease in elongation due to insufficient pulley effect of the polyrotaxane 1 and thus fail to achieve the desired level of abrasion and chipping resistance.

Specific examples of the resin material include urethane resins, cellulosic resins, acrylic resins and polyolefin resins. Specific examples of the addition agent include ultraviolet absorber, light stabilizer, a surface conditioner and a boiling inhibitor. Specific examples of the pigment include organic coloring pigments such as azo pigments, phthalocyane pigments, perilene pigments and inorganic coloring pigments such as carbon black, titanium dioxide and iron red. Specific examples of the brightening agent include aluminum pigments and mica pigments. The solvent can be either water or aqueous solvent. Herein, the aqueous solvent refers to a solvent capable of interacting with water and thus having an affinity for water. Specific examples of the aqueous solvent include alcohols such as isopropyl alcohol, butyl alcohol and ethylene glycol, ether esters such as cellosolve acetate, butylcellosolve acetate and diethylene glycol monoethyl ether and glycol ethers such as ethylene glycol monoethyl ether, ethylene glycol monobutyl ether and propylene glycol monomethyl ether. The hydrophilic polyrotaxane 1 generally shows good solubility in a mixed solvent of two or more of these solvents. Among others, alcohols are preferred. Especially preferred is glycol ether. The solvent may be prepared by adding a slight amount of organic solvent such as toluene into the aqueous solvent as long as the solvent maintains a strong water affinity in its entirety.

It is desirable in the present invention to blend a diluted solution of the hydrophilic polyrotaxane 1 in water or aqueous solvent with various coating medium materials although the hydrophilic polyrotaxane 1 can be blended directly with the various coating medium materials. The polyrotaxane solution may be prepared at the time of or prior to production of the coating medium. For example, the room-temperature drying aqueous overcoating medium can be produced by blending the hydrophilic polyrotaxane 1 with any existing room-temperature drying aqueous coating such as acrylic coating or cellulosic coating.

The room-temperature drying aqueous overcoating medium can be either a luster coating or a lusterless coating in the present invention. In this case, a matte component such as resin beads can be added along with the above coating components.

Further, the room-temperature drying aqueous overcoating medium can be either a clear coating, a base coating or an enamel coating in the present invention. Namely, the coating medium can attain base coating or enamel coating characteristics by the addition of an organic or inorganic pigment. The coating medium can attain color-clear coating characteristics by the addition of a pigment or dye to such an extent as not to cause a loss of transparency.

In the present invention, the room-temperature drying aqueous overcoating medium can be applied to various substrate materials such as metal materials e.g. iron, steel and aluminum, resin materials, wooden materials, lithic materials such as stones, bricks and blocks and leather materials by means of various coating machines such as spray gun under the same workability as to conventional coatings and dried and set to the coating film (clear coating film, base coating film, enamel coating film) at room temperature. There is no particular restriction on the thickness of the coating film. Preferably, the coating film thickness is of the order of 20 to 40 µm in the case of the clear coating film, 10 to 15 µm in the case of the base coating film and 20 to 40 µm in the case of the enamel coating film.

For examples, it is feasible to apply a base coating to a substrate, apply the room-temperature drying aqueous overcoating medium as a clear coating onto the base coating, and then, subject these coatings to baking or room-temperature drying, thereby providing a two-layer laminated coating film structure of base and clear coating layers.

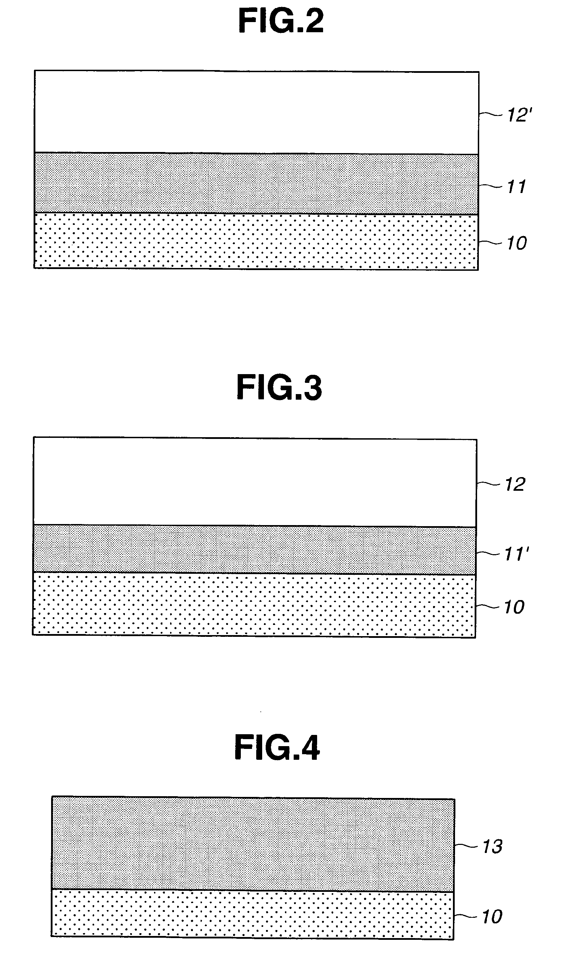

The base coating and the clear coating can be applied and baked in the same way as above, after applying an undercoating to the substrate and subjecting the undercoating to baking or room-temperature drying, so as to provide a three-layer laminated coating film structure consisting of an undercoating layer 10, a base coating layer 11 and a clear coating layer 12' of the room-temperature drying aqueous overcoating medium formed sequentially on the substrate surface as shown in FIG. 2.

It is also feasible to apply the room-temperature drying aqueous overcoating medium as a base coating to a substrate, apply a clear coating onto the base coating, and then, subject these coatings to baking or room-temperature drying.

The base coating and the clear coating can be applied and dried in the same way as above, after applying an undercoating to the substrate and subjecting the undercoating to baking or room-temperature drying, so as to provide a three-layer laminated coating film structure consisting of an undercoating layer 10, a base coating layer 11' of the room-temperature drying aqueous overcoating medium and an clear coating layer 12 as shown in FIG. 3.

It is further feasible to apply the room-temperature drying aqueous overcoating medium as an enamel coating to a substrate and subject the enamel coating to room-temperature drying after applying an undercoating to the substrate and subjecting the undercoating to baking or room-temperature drying, so as to provide a two-layer laminated coating film structure consisting of an undercoating layer 10 and an enamel coating layer 13 of the room-temperature drying aqueous overcoating medium as shown in FIG. 4. Depending on the kind of the substrate, the undercoating may be omitted.

For convenience in explanation, the laminated coating film can imply those formed by applying only the aqueous overcoating medium to the substrate. The coating film is not however limited to be of single-layer structure but may be of multilayer structure.

### Examples

The present invention will be described in more detail by reference to the following examples. It should be however noted that the following examples are only illustrative and not intended to limit the invention thereto.

### Example 1

### (1) Preparation of PEG-carboxylic acid by TEMPO oxidation of PEG

First, 10 g of polyethylene glycol (PEG) (molecular weight: 1000), 100 mg of TEMPO (2,2,6,6-tetramethyl-1-piperidinyl oxy radical) and 1 g of sodium bromide were dissolved in 100 ml of water, followed by adding thereto 5 ml of commercially-available aqueous sodium hypochlorite solution (effective chlorine concentration: 5%) and stirring the resulting solution for 10 minutes at room temperature. In order to decompose residual sodium hypochlorite, up to 5 ml of ethanol was added to the solution. With this, the reaction was completed. Any components other than inorganic salts were extracted with 50 ml of methylene chloride three times from the solution. The methylene chloride extractant was removed by distillation with an evaporator. The distillation residue was then dissolved in 250 ml of hot ethanol and placed in a refrigerator (-4°C) for one night to extract PEG-carboxylic acid only. The extracted PEG-carboxylic acid was recovered and dried.

### (2) Preparation of inclusion complex of PEG-carboxylic acid and α-CD

Next, 3 g of the above-prepared PEG-carboxylic acid and 12 g of α-cyclodextrin (α-CD) were each dissolved in 50 ml of 70°C hot water and mixed well together by shaking. The mixed solution was placed in a refrigerator (-4°C) for one night to precipitate an inclusion complex in cream form. The inclusion complex was recovered by freeze drying.

### (3) Weight reduction of α-CD and blocking of inclusion complex by adamantine amine/BOP reagent reaction system

A dispersion liquid was prepared by dispersing 14 g of the above-prepared inclusion complex in 20 ml of mixed solvent of dimethylformamide/dimethyl sulfoxide (DMF/DMSO) (volume ratio: 75/25). On the other hand, 3 g of benzotriazole-1-yl-oxy-tris(dimethylan-tino) phosphonium hexafluorophosphate (BOP reagent), 1 g of 1-hydroxybenzotriazole (HOBt), 1.4 g of adamantine amine and 1.25 ml of diisopropylethyl amine were dissolved in this order into 10 ml of DMF at room temperature. This solution was added to the dispersion liquid and quickly mixed well together by shaking. The resulting slurry sample was placed in a refrigerator (-4°C) for one night. After that, the sample was washed twice by adding 50 ml of mixed solvent of DMF/methanol (volume ratio: 1/1) to the sample, blending the sample with the solvent, subjecting the sample solution to centrifugal separation and throwing away the supernatant liquor. The sample was further washed with 100 ml of methanol twice by the same centrifugation operation. The precipitate was vacuum-dried and dissolved in 50 ml of DMSO. The resulting clear solution was added to 700 ml of water to precipitate a polyrotaxane out of the solution. The precipitated polyrotaxane was recovered by centrifugal separation and vacuum- or freeze-dried. The above cycle of DMSO dissolution, water precipitation, recovery and drying was repeated twice. The polyrotaxane was eventually obtained as a purified reaction product.

### (4) Hydroxy-propylation of α-CD hydroxyl groups

Subsequently, 500 mg of the above-prepared polyrotaxane was dissolved in 50 ml of 1 mol/l NaOH aqueous solution, followed by adding thereto 3.83 g (66 mmol) of propylene oxide. The resulting reaction solution was stirred for one night at room temperature in an argon atmosphere, neutralized with 1 mol/l HCI aqueous solution, dialyzed by a dialyzing tube and freeze-dried to recover a hydrophilic modified polyrotaxane. The thus-obtained hydrophilic modified polyrotaxane was identified by ¹H-NMR and GPC to be of the desired polyrotaxane form in which the α-CD inclusion amount was 0.06 and the hydrophilic modification degree was 0.1.

### (5) Preparation of coating medium

The above hydrophilic polyrotaxane was dissolved to a concentration of 10% in distilled water. The resulting hydrophilic polyrotaxane aqueous solution was added, with stirring, to a resin solution of 20% of cellulose acetate butylate (available under the trade name of "CMCAB-641-0.5" from EASTMAN CHEMICAL COMPANY) (prepared by adding 200 g of cellulose acetate butylate with stirring to 300 g of butycellosolve and pouring a mixed solution of water/amine (490.09 g water/1.91g dimethyl aminoethanol) into the cellulose acetate butylate solution). With this, a room-temperature drying aqueous clear coating medium was completed such that the content of the hydrophilic polyrotaxane was 50% with respect to the coating film forming component; the molecular weight of the polyrotaxane linear molecule (PEG) was 1000; the inclusion amount of the polyrotaxane cyclic molecule (α-CD) was 0.06; and the hydrophilic modification degree of the polyrotaxane was 0.1.

### (6) Formation of laminated coating film

A cation electrodeposition coating (available under the trade name of "Powertop U600M" from Nippon Paint Co., Ltd.) was electrodeposited with a dry thickness of 20 µm onto a zinc-phosphate-treated dull steel plate of 0.8 mm thickness and 70 mm × 150 mm size and baked for 30 minutes at 160°C. After that, a gray undercoating (available under the trade name of "Hyepico No. 500" from Nippon Yushi Co.) was applied with a dry thickness of 30 µm and baked for 30 minutes at 140°C. A metallic coating (available under the trade name of "Aqua BC-3(3)" from Nippon Yushi Co.) was further applied with a thickness of 15 µm. The room-temperature drying aqueous clear coating medium was then applied by wet on wet with a dry thickness of 30 µm.

### Examples 2-8

Room-temperature drying aqueous clear coating mediums were prepared in the same way as in Example 1, except for the compositional specifications as indicated in TABLE 1. Further, laminated coating films were formed using the prepared clear coating mediums.

### Example 9

### (1) Preparation of PEG-carboxylic acid by TEMPO oxidation of PEG

First, 10 g of polyethylene glycol (PEG) (molecular weight: 35000), 100 mg of TEMPO (2,2,6,6-tetramethyl-l-piperidinyl oxy radical) and 1 g of sodium bromide were dissolved in 100 ml of water, followed by adding thereto 5 ml of commercially-available aqueous sodium hypochlorite solution (effective chlorine concentration: 5%) and stirring the resulting solution for 10 minutes at room temperature. In order to decompose residual sodium hypochlorite, up to 5 ml of ethanol was added to the solution. With this, the reaction was completed. Any components other than inorganic salts were extracted with 50 ml of methylene chloride three times from the solution. The methylene chloride extractant was removed by distillation with an evaporator. The distillation residue was then dissolved in 250 ml of hot ethanol and placed in a refrigerator (-4°C) for one night to extract PEG-carboxylic acid only. The extracted PEG-carboxylic acid was recovered and dried.

### (2) Preparation of inclusion complex of PEG-carboxylic acid and α-CD

Next, 3 g of the above-prepared PEG-carboxylic acid and 12 g of α-cyclodextrin (α-CD) were each dissolved in 50 ml of 70°C hot water and mixed well together by shaking. The mixed solution was placed in a refrigerator (-4°C) for one night to precipitate an inclusion complex in cream form. The inclusion complex was recovered by freeze drying.

### (3) Weight reduction of α-CD and blocking of inclusion complex by adamantine amine/BOP reagent reaction system

A solution was prepared by dissolving 3 g of BOP reagent, 1 g of HOBt, 1.4 g of adamantine amine and 1.25 ml of diisopropylethyl amine in this order into 10 ml of DMF at room temperature. To this solution added was 14 g of the above-prepared inclusion complex, followed by stirring quickly. The resulting slurry sample was placed in a refrigerator (-4°C) for one night. After that, the sample was washed twice by adding 50 ml of mixed solvent of DMF/methanol (volume ratio: 1/1) to the sample, blending the sample with the solvent, subjecting the sample solution to centrifugal separation and throwing away the supernatant liquor. The sample was further washed with 100 ml of methanol twice by the same centrifugation operation. The precipitate was vacuum-dried and dissolved in 50 ml of DMSO. The resulting clear solution was added to 700 ml of water to precipitate a polyrotaxane out of the solution. The precipitated polyrotaxane was recovered by centrifugal separation and vacuum- or freeze-dried. The above cycle of DMSO dissolution, water precipitation, recovery and drying was repeated twice. The polyrotaxane was eventually obtained as a purified reaction product.

### (4) Hydroxy-propylation of α-CD hydroxyl groups

Subsequently, 500 mg of the above-prepared polyrotaxane was dissolved in 50 ml of 1 mol/l NaOH aqueous solution, followed by adding thereto 3.83 g (66 mmol) of propylene oxide. The resulting reaction solution was stirred for one night at room temperature in an argon atmosphere, neutralized with 1 mol/l HCI aqueous solution, dialyzed by a dialyzing tube and freeze-dried to recover a hydrophilic modified polyrotaxane. The thus-obtained hydrophilic modified polyrotaxane was identified by ¹H-NMR and GPC to be of the desired polyrotaxane form in which the α-CD inclusion amount was 0.61 and the hydrophilic modification degree was 0.1.

### (5) Preparation of coating medium

The above hydrophilic polyrotaxane was dissolved to a concentration of 10% in distilled water. The resulting hydrophilic polyrotaxane aqueous solution was added, with stirring, to a resin solution of 20% of cellulose acetate butylate (available under the trade name of "CMCAB-641-0.5" from EASTMAN CHEMICAL COMPANY) (prepared by adding 200 g of cellulose acetate butylate with stirring to 300 g of butycellosolve and pouring a mixed solution of water/amine (490.09 g water/1.91g dimethyl aminoethanol) into the cellulose acetate butylate solution). With this, a room-temperature drying aqueous clear coating medium was completed such that the content of the hydrophilic polyrotaxane was 1 % with respect to the coating film forming component; the molecular weight of the polyrotaxane linear molecule (PEG) was 1000; the inclusion amount of the polyrotaxane cyclic molecule (α-CD) was 0.06; and the hydrophilic modification degree of the polyrotaxane was 0.1.

### (6) Formation of laminated coating film

A cation electrodeposition coating (available under the trade name of "Powertop U600M" from Nippon Paint Co., Ltd.) was electrodeposited with a dry thickness of 20 µm onto a zinc-phosphate-treated dull steel plate of 0.8 mm thickness and 70 mm × 150 mm size and baked for 30 minutes at 160°C. After that, a gray undercoating (available under the trade name of "Hyepico No. 500" from Nippon Yushi Co.) was applied with a dry thickness of 30 µm and baked for 30 minutes at 140°C. The room-temperature drying aqueous clear coating medium was then applied with a dry thickness of 30 µm and baked for 30 minutes at 140°C to form an enamel coating film.

### Examples 10-12

Room-temperature drying aqueous enamel coating mediums were prepared in the same way as in Example 9, except for the compositional specifications as indicated in TABLE 1. Further, laminated coating films were formed using the prepared enamel coating mediums.

### Examples 13-14

Room-temperature drying aqueous clear coating mediums were prepared in the same way as in Examples 1-8, except for the compositional specifications as indicated in TABLE 1. Further, laminated coating films were formed using the prepared clear coating compositions.

### Comparative Examples 1-5

Room-temperature drying aqueous clear coating mediums were prepared in the same way as in Examples 1-8, except for the compositional specifications as indicated in TABLE 1. Further, laminated coating films were formed using the prepared clear coating mediums.

### Comparative Examples 6

### (1) Preparation of PEG-carboxylic acid by TEMPO oxidation of PEG

First, 10 g of polyethylene glycol (PEG) (molecular weight: 100000), 100 mg of TEMPO (2,2,6,6-tetramethyl-1-piperidinyl oxy radical) and 1 g of sodium bromide were dissolved in 100 ml of water, followed by adding thereto 5 ml of commercially-available aqueous sodium hypochlorite solution (effective chlorine concentration: 5%) and stirring the resulting solution for 10 minutes at room temperature. In order to decompose residual sodium hypochlorite, up to 5 ml of ethanol was added to the solution. With this, the reaction was completed. Any components other than inorganic salts were extracted with 50 ml of methylene chloride three times from the solution. The methylene chloride extractant was removed by distillation with an evaporator. The distillation residue was then dissolved in 250 ml of hot ethanol and placed in a refrigerator (-4°C) for one night to extract PEG-carboxylic acid only. The extracted PEG-carboxylic acid was recovered and dried.

### (2) Preparation of inclusion complex of PEG-carboxylic acid and α-CD

Next, 3 g of the above-prepared PEG-carboxylic acid and 12 g of α-cyclodextrin (α-CD) were each dissolved in 50 ml of 70°C hot water and mixed well together by shaking. The mixed solution was placed in a refrigerator (-4°C) for one night to precipitate an inclusion complex in cream form. The inclusion complex was recovered by freeze drying.

### (3) Weight reduction of α-CD and blocking of inclusion complex by adamantine amine/BOP reagent reaction system

A solution was prepared by dissolving 3 g of BOP reagent, 1 g of HOBt, 1.4 g of adamantine amine and 1.25 ml of diisopropylethyl amine in this order into 10 ml of DMF at room temperature. To this solution added was 14 g of the above-prepared inclusion complex, followed by stirring quickly. The resulting slurry sample was placed in a refrigerator (-4°C) for one night. After that, the sample was washed twice by adding 50 ml of mixed solvent of DMF/methanol (volume ratio: 1/1) to the sample, blending the sample with the solvent, subjecting the sample solution to centrifugal separation and throwing away the supernatant liquor. The sample was further washed with 100 ml of methanol twice by the same centrifugation operation. The precipitate was vacuum-dried and dissolved in 50 ml of DMSO. The resulting clear solution was added to 700 ml of water to precipitate a polyrotaxane out of the solution. The precipitated polyrotaxane was recovered by centrifugal separation and vacuum- or freeze-dried. The above cycle of DMSO dissolution, water precipitation, recovery and drying was repeated twice. The polyrotaxane was eventually obtained as a purified reaction product.

### (4) Hydroxy-propylation of α-CD hydroxyl groups

Subsequently, 500 mg of the above-prepared polyrotaxane was dissolved in 50 ml of 1 mol/l NaOH aqueous solution, followed by adding thereto 3.83 g (66 mmol) of propylene oxide. The resulting reaction solution was stirred for one night at room temperature in an argon atmosphere, neutralized with 1 mol/l HCl aqueous solution, dialyzed by a dialyzing tube and freeze-dried to recover a hydroxy-propylated polyrotaxane.

### (5) Hydrophobic modification of polyrotaxane

Then, 10 ml of ε-caprolactone was dried with a molecular sieve and added to 500 mg of the above hydroxy-propylated polyrotaxane. The resulting sample was stirred for 30 minutes at room temperature, subjected to permeation and then reacted with 0.2 ml of tin 2-ethylhexanoate for 1 hour at 100°C. After the completion of the reaction, the sample was dissolved in 50 ml of toluene. The sample solution was added to 450 ml of hexane to precipitate a hydrophobic polyrotaxane out of the solution. The precipitated hydrophobic polyrotaxane was recovered and dried. The thus-obtained hydrophobic modified polyrotaxane was identified by ¹H-NMR and GPC to be of the desired polyrotaxane form in which the α-CD inclusion amount was 0.61 and the hydrophobic modification degree was 0.02.

### (6) Preparation of coating medium

The above hydrophobic polyrotaxane was dissolved to a concentration of 10% in distilled water. The resulting hydrophobic polyrotaxane aqueous solution was added, with stirring, to a resin solution of 20% of cellulose acetate butylate (available under the trade name of "CMCAB-641-0.5" from EASTMAN CHEMICAL COMPANY) (prepared by adding 200 g of cellulose acetate butylate with stirring to 300 g of butycellosolve and pouring a mixed solution of water/amine (490.09 g water/1.91g dimethyl aminoethanol) into the cellulose acetate butylate solution). With this, a room-temperature drying aqueous clear coating medium was completed such that the content of the hydrophobic polyrotaxane was 50% with respect to the coating film forming component; the molecular weight of the polyrotaxane linear molecule (PEG) was 100000; the inclusion amount of the polyrotaxane cyclic molecule (α-CD) was 0.61; and the hydrophilic modification degree of the polyrotaxane was 0.02.

### (7) Formation of laminated coating film

A cation electrodeposition coating (available under the trade name of "Powertop U600M" from Nippon Paint Co., Ltd.) was electrodeposited with a dry thickness of 20 µm onto a zinc-phosphate-treated dull steel plate of 0.8 mm thickness and 70 mm × 150 mm size and baked for 30 minutes at 160°C. After that, a gray undercoating (available under the trade name of "Hyepico No. 500" from Nippon Yushi Co.) was applied with a dry thickness of 30 µm and baked for 30 minutes at 140°C. A metallic coating (available under the trade name of "Aqua BC-3(3)" from Nippon Yushi Co.) was further applied with a thickness of 15 µm. The room-temperature drying aqueous clear coating medium was then applied by wet on wet with a dry thickness of 30 µm.

### Property Evaluations

Evaluation tests were conducted on the solubility and pigment sedimentation degree of the coating mediums of Examples 1-14 and Comparative Examples 1-6 and the smoothness, chipping resistance and weather resistance of the coating films of these coating compositions based on the following criteria. The evaluation results are indicated in TABLE 1 along with the coating composition specifications.

### (1) Solubility

The solubility was evaluated visually checking the white turbidity of the coating applied to the glass plate.
○: no change
Δ: slightly white turbid
×: white turbid

### (2) Pigment sedimentation degree

The pigment sedimentation degree was evaluated by leaving the coating medium in a constant temperature bath of 40°C and checking whether or not the coating medium was in hard cake form (where the coating medium was solidified and could not be recovered by stirring) due to pigment sedimentation.
○: recoverable
Δ: recoverable but time-consuming
×: unrecoverable

### (3) Smoothness

The smoothness was evaluated by visually checking the evenness of the enamel coating film.
○: considerably smooth
Δ: slightly uneven
×: uneven

### (4) Abrasion resistance

The abrasion resistance was evaluated by placing the coating in an abrasion tester with a dust flannel (friction cloth) adhered to a sliding unit of the abrasion tester by a double-faced tape, causing 50 reciprocating movements of the coating relative to the friction cloth under a load of 0.22 g/cm², and then, checking the occurrence or non-occurrence of abrasive damage to the coating.
○: almost no damage
Δ: little damage
×: hard, remarkable damage

### (5) Weather resistance

The weather resistance was evaluated by testing the coating with a xenon weather meter (XWON) for 1440 hours and measuring the chromaticity difference (ΔE) of the coating.
○: ΔE 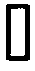 3
Δ: 3 < ΔE 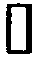 5
×: ΔE > 5

**TABLE 1**

| Section | Polyrotaxane | | | | Coating medium | | | Coating film properties | | |
|---|---|---|---|---|---|---|---|---|---|---|
| | PEG molecular weight | α-CD inclusion amount | Hydrophilic modification degree | Content in coating medium | Type | Solubility | Pigment sedimentation degree | Smoothness | Abrasion resistance | Weather resistance |
| Example 1 | 1000 | 0.06 | 0.1 | 50 | clear | ○ | - | ○ | Δ | ○ |
| Example 2 | 1000 | 0.61 | 0.1 | 50 | clear | ○ | - | ○ | Δ | ○ |
| Example 3 | 50000 | 0.06 | 0.1 | 50 | clear | ○ | - | ○ | ○ | ○ |
| Example 4 | 50000 | 0.61 | 0.1 | 50 | clear | ○ | - | ○ | ○ | ○ |
| Example 5 | 35000 | 0.61 | 0.1 | 1 | clear | ○ | - | ○ | Δ | ○ |
| Example 6 | 35000 | 0.61 | 0.1 | 50 | clear | ○ | - | ○ | ○ | ○ |
| Example 7 | 35000 | 0.61 | 0.5 | 50 | clear | ○ | - | ○ | ○ | ○ |
| Example 8 | 35000 | 0.61 | 0.1 | 100 | clear | ○ | - | ○ | ○ | ○ |
| Example 9 | 35000 | 0.61 | 0.1 | 1 | enamel | ○ | ○ | ○ | Δ | ○ |
| Example 10 | 35000 | 0.61 | 0.1 | 50 | enamel | ○ | ○ | ○ | ○ | ○ |
| Example 11 | 35000 | 0.61 | 0.5 | 50 | enamel | ○ | ○ | ○ | ○ | ○ |
| Example 12 | 35000 | 0.61 | 0.1 | 100 | enamel | ○ | ○ | ○ | ○ | ○ |
| Example 13 | 500 | 0.61 | 0.5 | 50 | clear | Δ | - | ○ | Δ | ○ |
| Example 14 | 100000 | 0.61 | 0.5 | 50 | clear | Δ | - | Δ | Δ | Δ |
| Comparative Example 1 | 35000 | 0.61 | 0.1 | 0 | clear | - | - | ○ | × | ○ |
| Comparative Example 2 | 500 | 0.06 | 0 | 50 | clear | × | - | × | × | ○ |
| Comparative Example 3 | 500 | 0.61 | 0 | 50 | clear | × | - | × | × | ○ |
| Comparative Example 4 | 100000 | 0.06 | 0 | 50 | clear | × | - | × | × | Δ |
| Comparative Example 5 | 100000 | 0.61 | 0 | 50 | clear | × | - | × | × | Δ |
| Comparative Example 6 | 100000 | 0.61 | 0.02 (PCL) | 50 | clear | × | - | × | × | Δ |

It has been clearly shown in TABLE 1 that the room-temperature drying aqueous overcoating mediums of Examples 1-14 had good solubility and high pigment sedimentation resistance because of polyrotaxane hydrophilicity and that the films of these overcoating mediums had improved abrasion resistance as well as good appearance and weather resistance under the polyrotaxane pulley effect. The overcoating mediums and the coating films of Examples 9-11 had a tendency to show some property deteriorations because of the molecular weight of the linear molecule and the content of the hydrophilic polyrotaxane falling outside the respective preferable ranges, but were considered usable on the whole.

It has been shown that, by contrast, the overcoating medium of Comparative Example 1 where no polyrotaxane was added, the overcoating mediums of Comparative Examples 2-5 where α-CD of the polyrotaxane was unmodified and the overcoating medium of Comparative Example 6 where α-CD of the polyrotaxane was hydrophobically modified had poor abrasion resistance, solubility and coating smoothness.

Although the present invention has been described with reference to the above-specific embodiments of the invention, the invention is not limited to these exemplary embodiments. Various modification and variation of the embodiments described above will occur to those skilled in the art in light of the above teachings.

## Claims

1. A room-temperature drying aqueous overcoating material formed of a hydrophilic polyrotaxane alone or in combination with an additional resin, the hydrophilic polyrotaxane having a cyclic molecule, a linear molecule included in the cyclic molecule in a skewered manner and blocking groups arranged on opposite ends of the linear molecule to prevent elimination of the cyclic molecule, at least one of the linear molecule and the cyclic molecule having hydrophilicity.

2. The room-temperature drying aqueous overcoating material according to claim 1, wherein the cyclic molecule has hydroxyl groups and all or part of the hydroxyl groups are modified with a hydrophilic modifying group.

3. The room-temperature drying aqueous overcoating material according to claim 1 or 2, wherein the hydrophilic polyrotaxane has a solubility parameter of 8.5 to 23.4 and is capable of being dissolved or dispersed uniformly in water or aqueous solvent.

4. The room-temperature drying aqueous overcoating material according to claim 2 or 3, wherein the degree of modification of the cyclic molecule with the hydrophilic modifying group is 0.1 or greater, with the proviso that the maximum possible degree of modification of the hydroxyl groups of the cyclic molecule is 1.

5. The room-temperature drying aqueous overcoating material according to any one of claims 1 to 4, wherein the inclusion amount of the cyclic molecule is 0.06 to 0.61, with the proviso that the maximum possible inclusion amount of the cyclic molecule to include therein the linear molecule is 1.

6. The room-temperature drying aqueous overcoating material according to any one of claims 1 to 5, wherein the linear molecule has a molecular weight of 1000 to 50000.

7. The room-temperature drying aqueous overcoating material according to any one of claims 1 to 6, wherein the cyclic molecule is at least one cyclodextrin selected from the group consisting of α-cyclodextrin, β-cyclodextrin and γ-cyclodextrin.

8. A room-temperature drying aqueous overcoating medium comprising the room-temperature drying aqueous overcoating material according to any one of claims 1 to 7.

9. The room-temperature drying aqueous overcoating medium according to claim 8, wherein the overcoating medium is capable of forming a coating film without crosslinking of the hydrophilic polyrotaxane.

10. The room-temperature drying aqueous overcoating medium according to claim 8 or 9, wherein the content of the hydrophilic polyrotaxane is 1 to 100% in units of mass ratio with respect to coating film forming component.

11. The room-temperature drying aqueous overcoating medium according to any one of claims 8 to 10, wherein the overcoating medium is prepared by blending at least one selected from the group consisting of a resin material, an addition agent, a pigment, a brightening agent and a solvent with the room-temperature drying aqueous overcoating material.

12. The room-temperature drying aqueous overcoating medium according to any one of claims 8 to 11, wherein the overcoating medium is either a luster coating or a lusterless coating medium.

13. The room-temperature drying aqueous overcoating medium according to any one of claims 8 to 11, wherein the overcoating medium is a clear coating medium.

14. The room-temperature drying aqueous overcoating medium according to any one of claims 8 to 11, wherein the overcoating medium is a base coating medium.

15. The room-temperature drying aqueous overcoating medium according to any one of claims 8 to 11, wherein the overcoating medium is an enamel coating medium.

16. A coating film formed by curing the room-temperature drying aqueous overcoating medium according to any one of claims 8 to 15.

17. A coating film having a layer of a base coating and a layer of the clear coating medium according to claim 13 formed sequentially on a substrate.

18. The coating film according to claim 17, having an undercoating layer beneath the layer of the base coating.

19. A coating film having a layer of the base coating medium according to claim 14 and a layer of a clear coating formed sequentially on a substrate.

20. The coating film according to claim 19, having an undercoating layer beneath the layer of the base coating medium.

21. A coating film having a layer of the enamel coating medium according to claim 15 formed on a substrate.

22. The coating film according to claim 21, having an undercoating layer beneath the layer of the enamel coating medium.

23. A coating film having a layer of the base coating medium according to claim 14 and a layer of the clear coating medium according to claim 13 formed sequentially on a substrate.

24. The coating film according to claim 23, having an undercoating layer beneath the layer of the base coating medium.
